Europäisches Patentamt

European Patent Office

Office européen des brevets

(19)

(11) **EP 1 718 002 A1**

(12) **EUROPEAN PATENT APPLICATION**

(43) Date of publication:
**02.11.2006 Bulletin 2006/44**

(51) Int Cl.:
***H04L 12/56*** (2006.01)

(21) Application number: **05425267.1**

(22) Date of filing: **29.04.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **Siemens S.p.A.**
**20126 Milano (IT)**

(72) Inventors:
• **Annese, Pierfrancesco**
  **25154 Fara Gera D'Adda (IT)**
• **Manfredi, Giorgio**
  **28100 Novara (IT)**
• **Melotti, Patrizia**
  **20146 Milano (IT)**

(74) Representative: **Giustini, Delio**
**Siemens Mobile Communications S.p.A.**
**Postfach 22 16 34**
**80506 München (DE)**

(54) **User selection method and device for data packet services in wireless communication systems**

(57)     A method of selecting users (1a...1n) for allocation of transmission resources for downlink packet transmission from a base station (2) of a wireless communication system, in particular for HSDPA service, determines a time-variable weight for each user and selects, for resource allocation, the users with the greatest weights. Such weight is calculated as a linear combination of normalised parameters related with the channel fading, the buffer occupancy and the timing of pending retransmissions of packets that have not been correctly received by the user (1a...1n).

FIG. 4

EP 1 718 002 A1

**Description**

Field of the invention

The present invention refers to packet transmission services in wireless communication systems, and more particularly it concerns a method of and device for selecting users for allotment of downlink resources in high-speed packet transmission services.
Preferably, but not exclusively, the invention is applied in the High-speed Downlink Packet Access (HSDPA) for Wideband Code Division Multiple Access (WCDMA) systems.

Background of the Invention

The dramatic increment of the demand by users of wireless communication systems for data services, like e-mail, file download, web browsing etc., has made necessary an adequate response by the operators and industry. Known high-data rate packet transmission systems, like cdma2000, IMT-2000, 1XEV-DO, allow attaining downward data rates of up to 2.5 Mb/s.
A new system, named High-speed Downlink Packet Access (HSDPA) for Wideband Code Division Multiple Access (WCDMA), has been developed by 3GPP (3rd Generation Partnership Project) to support data communications characterised by lower real-time demands than telephony services, higher data rates and asymmetric traffic, i.e. higher traffic volume in downlink direction than in uplink direction, as is for instance the case of file download and web browsing. The technological enhancements incorporated by HSDPA not only provide a spectral efficiency gain, but also support user data rates up e.g. to 8 - 10 Mb/s, i. e. rates about 4 - 5 times higher than e. g. the IMT-2000 (International Mobile Telecommunications 2000) requirements.
The novel key features of HSDPA are included in 3GPP Release 5 Technical Specifications (TS). Reference can be made in particular to 3GPP TS 25.211 v5.5.0 (2004-06) "Physical channels and mapping of transport channels onto physical channels (FDD)", 3GPP TS 25.212 v5.5.0 (2004-03) "Multiplexing and channel coding (FDD)", 3GPP TS 25.214 v5.8.0 (2004-03) "Physical Layer Procedure (FDD)", 3GPP TS 25.306 v5.8.0 (2004-03) "UE Radio Access capabilities", and 3GPP TS 25.321 v5.5.0 (2003-06) "Medium Access Control (MAC) protocol specification".
HSDPA has the following purposes and properties:

- Data transmission in downlink direction only, i.e. from the core network via the radio network control RNC to the subscriber.
- Support of services from different QoS (Quality of Service) classes:

- Background, e.g. file download, E-mail delivery, SMS, telematic services: lowest priority, low timing constraints, but preservation of payload contents (low bit error rate);
- Interactive, e.g. web browsing, data base retrieval, server access, polling of measurement reports: higher traffic priority than background class traffic; end-to-end delay caused by HSDPA must be acceptable in a human- or machine-initiated request response pattern, i.e. it should not exceed a few seconds;
- Streaming, e.g. video/audio streaming: guaranteed, but with variable bit rate; the transmission delay must not exceed a certain time (~ 250ms).

QoS class Conversational, comprising services like voice and video conferencing with strict real-time requirement, i.e. low transfer time and low delay jitter, is not supported.
The key idea of the HSDPA concept is to increase packet data throughput with methods as link adaptation and fast physical layer (L1) retransmission combining.
With HSDPA, two of the most fundamental features of WCDMA, variable Spreading Factor (SF) and fast power control, are disabled and replaced by means of adaptive modulation and coding (AMC), extensive multi-code operation and a fast and spectrally efficient retransmission strategy (Hybrid Automatic Repeat Request, HARQ).
Link adaptation function and AMC select a coding and modulation combination that requires higher SNR, which is available for the user close to the Node B (or with good interference/ channel conditions in short-term sense). To enable a large dynamic range of the HSDPA link adaptation and to maintain a good spectral efficiency, a user may simultaneously utilise up to 15 codes in parallel. The use of more robust coding, fast Hybrid Automatic Repeat Request and multi-code operation removes the need for variable SF.
The physical layer packet combining basically means that the terminal stores the received data packets in soft memory and, if decoding has failed, the new transmission is combined with the old one before channel decoding.
The high data rate entails the need for a rapid scheduling process, in order to select the users that can receive packets at a given time and to allocate downlink resources (modulation and coding scheme, power, number of codes...)

to each transmission. Rapid decisions allow the system to track the short-term variations of the channel conditions. That is why the scheduling process is performed in the base station (Node B).

Generally, in practical systems, user selection and resource allocation to the selected users are dealt with in separate steps (greedy algorithm), in order to reduce the computational complexity inherent in a joint process

The present invention is concerned with user selection.

Several user selection algorithms are known, each aiming at optimising a specific system feature, such as data throughput or user fairness. A review of such algorithms can be found for instance in the paper "Scheduling Algorithms for the CDMA2000 Packet Data Evolution", by R.C. Elliott and W.A. Kraymièn, presented at the IEEE Vehicular Technology Conference (VTC) Fall 2002, published in Volume 1, pp. 304 - 310, of the conference proceedings.

The paper "Fast Scheduling Policies using WCDMA High Speed Downlink Patent Access" by M. Boaretto et al., presented at the IEEE Vehicular Technology Conference Fall '03, Orlando, Oct. 2003, discloses a scheduling algorithm just designed for HSDPA. The algorithm aims at providing a just balance between throughput and fairness, by selecting the users through an evaluation of an utility function taking into account the information available at the transmitting side (here, the Node B), in particular a priority class and one or more among buffer occupancy, channel state (in terms of signal-to-interference ratio, SIR) and head packet deadline. As a utility function, the authors propose a linear combination of exponential functions of the normalised buffer occupancy, the normalised SIR and the normalised head packet deadline, each quantity being weighted by the priority class.

This prior art algorithm is not completely satisfactory in that it has no provision for avoiding or minimising the loss of packets for which retransmission is necessary.

Thus, it is an object of the present invention to provide a user selection method and device that minimise packet loss, without sacrificing throughput and fairness.

Summary of the Invention

The invention provides, in a first aspect, a method comprising the steps of calculating, for each user having access to a service the packet transmission is related with and at predetermined time intervals, a time-variable weight from parameters related with at least one among a transmission channel quality and a buffer occupancy, and selecting, for resource allocation at each interval, the users with the greatest weights, up to a maximum number of users than can be served simultaneously. The method is characterised in that it further comprises the steps of determining, for each user, also a parameter representative of a timing of pending retransmissions of packets that have not been correctly received by the user and calculating the weight by combining said parameter representative of the timing of pending retransmissions with at least one of said parameters representative of the transmission channel quality and the buffer occupancy.

In a second aspect, there is provided a device for implementing the method, which device belong to a base station of a wireless communication system and comprises processing and computing means arranged to receive from the users, from buffer control units and from a radio network controller, information about the state of the transmission channel from the base station to each user and about the buffer occupancy, and to calculate for each user, at predetermined time intervals, a weight from parameters representing at least one of a channel quality and said buffer occupancy. Said processing and computing means include computing means for determining a parameter representative of a timing of pending retransmissions of packets which have not been correctly received by the users, based upon the instant of reception of an information that a packet has not correctly been received and upon a maximum time allotted to retransmission for the different queues, and are arranged to compute said weight by combining said parameter representative of the timing of pending retransmissions with at least one of said parameters representative of the transmission channel quality and the buffer occupancy.

The invention also provides a base station in which user selection is performed by the above method and device.

Brief description of the drawings

Further objects, characteristics and advantages of the invention will become apparent from the following description of preferred embodiments, given by way of non-limiting example and illustrated in the accompanying drawings, in which:

- Fig. 1 is a schematic block diagram of a mobile communication system in which the invention is employed;
- Figs. 2 and 3 are flow charts of two alternative embodiments of the method of the invention; and
- Fig. 4 is a block diagram of a scheduler implementing the method of the invention.

Description of the preferred embodiments

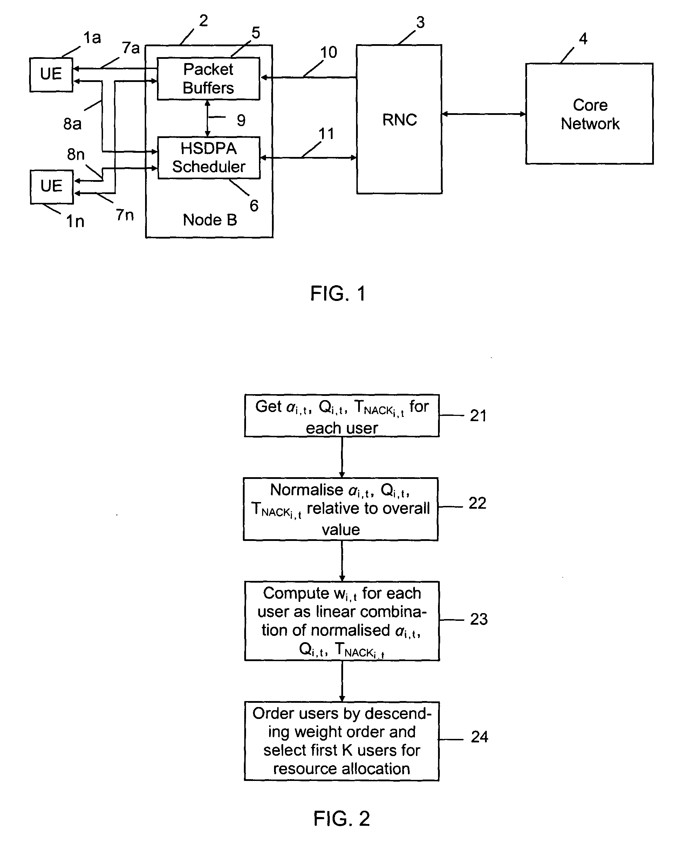

Referring to Fig. 1, there is schematically shown the architecture of a mobile communication system in which the invention is employed. A plurality of user's terminals 1a...1n in a cell have access to base station 2 (Node B in the 3rd generation terminology) controlled by a Radio Network Controller (RNC) 3, connected to core network 4. RNC 3 may control further Node Bs (not shown) besides the one denoted by reference numeral 2. Similarly, further Radio Network Controllers (not shown), each controlling one or more Node Bs, can be connected to core network 4.

Node B 2 comprises buffers 5 where the queues of HSDPA packets directed to the users are formed. Block 5 includes also the usual control units, arranged, inter alia, to detect the filling level of the buffers. Moreover, for allowing implementation of HSDPA, Node B also comprises a scheduler 6 selecting the users to which packets have to be transmitted and allocating downlink resources to such users.

Lines 7a ... 7n between buffers 5 and user terminals 1a...1n schematise the transport channel (known as HS-DSCH, High Speed Downlink Shared CHannel) carrying the user data to the terminals. Lines 8a...8n between scheduler 6 and user terminals 1a...1n represent the whole of the downlink and uplink control channels. Even if for sake of simplicity the drawing shows separate lines for each user, some of the control channels are shared among the users. Among said channels, an uplink dedicated control channel conveys feedback information (e.g. CQI (Channel Quality Indicator) reports, ACK/NACK (acknowledgement/negative acknowledgement signalling...) from each user terminal 1a...1n to scheduler 6. A shared downlink control channel conveys to the users the parameters necessary for decoding the associated data channel 7. Connection 9 between buffers 5 and scheduler 6 conveys the buffer occupancy information to scheduler 6 and conveys the commands for packet transmission to the selected users to the buffers. Reference numerals 10, 11 represent the data and signalling paths between RNC and buffers 5 and scheduler 6, respectively.

Scheduler 6 has to select at predetermined instants, e. g. at each Time Transmission Interval TTI, a subset of users among the C configured ones, and to choose the proper transmission power $p_i$ (i = 1 ... C)., number of codes $n_i$, modulation scheme $m_i$ and Transport Block Size $TrBk_i$ (i.e. number of bits transmitted to a user within a Time Transmission Interval TTI) for each selected user. Thus scheduler 6 has to find at each decision instant t, a set of parameters

$$\{i, n_i, p_i, m_i, TrBk_i\} \qquad (1)$$

that will reduce packet losses, maximise cell throughput and maintain throughput fairness, taking into account both system-wide and individual resource constraints:

$$\left. \begin{array}{l} n_i = N_i \\ \sum_i n_i = N \\ \sum_i p_i = P \\ TrBk_i = TrBk_{MAX,i} \end{array} \right\} \qquad (2)$$

where N and P are system constraints on the total number of spreading codes and the total system power, $N_i$ is a per user constraint on the number of codes that can be assigned to the i-th user and $TrBk_{MAX,i}$ is the maximum number of bits of an HS-DSCH transport block received within a TTI. Both $N_i$ and $TrBk_{MAX,i}$ are assigned according to the user category.

The scheduling process is split into two parts (Greedy algorithm): first a scheduling order for the users is found (user selection) and then, given the scheduling order, a set of resources is allocated to the selected users so as to maximise the transmission rate the user can receive, by using power and codes that are available.

The invention is concerned with user selection, which is performed, as in the prior art of M. Boaretto et al., by representing each user i by a time-varying weight $w_{i,t}$, evaluated e.g. at each TTI, and by choosing the K users with the highest weights, where K is the maximum number of users that can receive data in parallel at time t. According to the invention, weight $w_{i,t}$ is determined not only from the channel quality and the buffer occupancy, but it takes into account also the timing of pending retransmissions of packets which have not been correctly received by the users. This is a novel and peculiar feature of the invention, which contributes to avoiding or at least reducing packet loss due to the expiration of the time allowed for retransmission, and hence allows improving the overall quality of service.

According to the invention, weight $w_{i,t}$ is a linear combination, with adjustable combination factors, of three quantities representative of the channel fading, the buffer occupancy and the timing of pending retransmissions, respectively. For weight computation, the three quantities are normalised each with respect to its value for the whole of the configured users.

Two solutions are provided for taking into account the fading. The first one uses directly the fading information, and it will be referred to hereinafter as FQT (Fading Queue Time) user selection. The second one exploits the fading indirectly, through the rate attainable for the fading conditions experienced by the user, and it will be referred to hereinafter as RQT (Rate Queue Time) user selection. The two solutions will be now discussed separately.

According to the FQT solution, weight $w_{i,t}$ for each of the C configured users is expressed by:

$$w_{i,t}(\alpha_{i,t}, Q_{i,t}, T_{NACK_{i,t}}) = \delta \cdot \frac{\alpha_{i,t}}{\sum_{i=1}^{C} \alpha_{i,t}} + \gamma \cdot \frac{Q_{i,t}}{\sum_{i=1}^{C} Q_{i,t}} + \eta \cdot \frac{T_{NACK_{i,t}}}{\sum_{i=1}^{C} T_{NACK_{i,t}}} \qquad (3)$$

with $\delta + \gamma + \eta = 1$.

In equation (3):

- $\alpha_{i,t}$ is the fading prediction for the i-th user at time t, obtained from the Channel Quality Indicator (CQI) reported from mobile terminals 1a...1n; for instance, $\alpha_{i,t}$ is obtained by means of a second order linear predictor based on the last two values of CQI;
- $Q_{i,t}$ can be defined as

$$Q_{i,t} = \max_{j} \{q_{i,t}(j) \cdot \pi_i(j)\} \qquad j = 1 \ldots L_i(t) \qquad (4)$$

where $q_{i,t}(j)$ is the j-th queue size at time t, $\pi_i(j)$ is the scheduling priority related to $q_{i,t}(j)$, and $L_i(t)$ is the number of priority queues for the i-th user;

- $T_{NACK_{i,t}}$ is given by:

$$T_{NACK_{i,t}} = \max_{j} \{\frac{t_{NACK_{i,t}}(j)}{T_{1,j}}\} \qquad j = 1, \ldots, H_i \qquad (5)$$

where $t_{nack_{i,t}}(k)$ is the time elapsed from the arrival at Node B of a NACK (negative acknowledgement information, i.e. packet not detected correctly), associated with the k-th stopped HARQ process, to the scheduling decision instant t, $H_i$ is the number of configured HARQ process for i-th user at time t and $T_{1,j}$ represents the value of a timer $T_1$ (representing the maximum time within which retransmission can occur) associated with the j-th HARQ process. Note that $T_1$ is related to the queue from which data to be sent are taken, and hence it can actually be associated with the j-th HARQ process to which the data pertain.

The normalisation represented by the division of $\alpha_{i,t}$, $Q_{i,t}$ and $T_{NACK_{i,t}}$ by the sum of the respective values for all configured users makes the different quantities comparable.

Factors $\delta$, $\gamma$, $\eta$ can be adjusted between 0 and 1, while keeping their sum equal to 1, to allow varying the influence of each of the three terms in weight w.

Quantity $\alpha_{i,t}$ tends to favour users with the best channel condition, resulting in a degree of unfairness of the chosen scheduling policy, while $Q_{i,t}$ contributes to fairness among users, favouring selection of UEs with a great amount of data in their queues due to the fact that they have not been served because of the deep fading condition they experienced. $Q_{i,t}$ also prevents the selection of a UE with a very good channel, but little data to send, which could potentially waste control channel and channelisation code resources by sending only a small packet. The last quantity $T_{NACK_{i,t}}$ shifts the scheduling decision towards users who need retransmission, thus reducing the number of lost packets due to $T_1$ expiration, and limiting the average time for a correct decoding.

In practice, $\delta$, $\gamma$, $\eta$ can be adjusted between two extreme configurations: $\delta = 1$, $\gamma = \eta = 0$ and $\delta = \eta = 0$, $\gamma = 1$. Configuration $\delta = \gamma = 0$, $\eta = 1$ is not considered as a valid configuration because, in this way, no information about channel or data condition is taken into account, thus producing a "blind user selection" if there are no UEs with pending retransmission at time t. The skilled in the art will appreciate that the two extreme configurations correspond to known schedulers operating according to a maximum Carrier-to-Interference ratio (Max C/I) criterion (and more particular to MaxUnequal C/I criterion), and to a maximum queue (MAXQ) criterion, respectively. Such known schedulers are disclosed for instance in the Technical Specification Group (TSG) Radio Access Network Working Group (RAN WG) 1 #21 (TSGR1(01)0876) "Performance comparison of schedulers for HDSPA streaming services", presented by Philips NV at a meeting of RAN WG 1 held in Turin (Italy), 27th - 31st August 2001.

If the i-th user cannot be served in the current TTI because of its Inter-TTI Transmission Interval, $w_{i,t}$ is set to 0.

Note that according to 3GPP specifications, CQI may not be reported every TTI, but with longer periodicity, so that a same value of $\alpha_{i,t}$ can be used for several consecutive TTIs.

After having computed weights $w_{i,t}$ for all C configured users, the users are ordered in decreasing order of $w_{i,t}$ and the first K users, where K is the maximum number of shared control channels, are considered for further resource allocation. Allocation can take place in any conventional manner.

The process described above is represented also in the flow chart of Fig. 2, which refers to a given instant t.

At step 21, quantities $\alpha_{i,t}$, $Q_{i,t}$, $T_{NACK_{i,t}}$ are got for each of the C configured users and at step 22 they are normalised relative to the respective overall value for all C users. At step 23 the normalised quantities are multiplied by the respective factor $\delta$, $\gamma$, $\eta$ and summed to give weight $w_{i,t}$ according to (3). Lastly, at step 24, the users are ordered in descending weight order and the K users with the highest weights $w_{i,t}$ are chosen for resource allocation.

Considering directly the fading, as described above, could lead to favour users in constructive fading even if they have only little data to send, thus wasting code resources. Thus, in the RQT user selection, the fading is taken into account indirectly, through an estimated current bit rate $d_{i,t}$ attainable with the fading experienced by the user. In such case weight $w_{i,t}$ is expressed by:

$$w_{i,t}(d_{i,t}, Q_{i,t}, T_{NACK_{i,t}}) = \varepsilon \cdot \frac{d_{i,t}}{\sum_{i=1}^{C} d_{i,t}} + \gamma \cdot \frac{Q_{i,t}}{\sum_{i=1}^{C} Q_{i,t}} + \eta \cdot \frac{T_{NACK_{i,t}}}{\sum_{i=1}^{C} T_{NACK_{i,t}}} \tag{6}$$

with $\varepsilon + \gamma + \eta = 1$.

Quantity $d_{i,t}$ is calculated in a manner that will be disclosed hereinafter. Moreover, to prevent the selection of a UE with a very good channel, but little data to send, the constraint that the number of bits transmitted in a TTI is smaller than $Q_{i,t}$ is further introduced, that is

$$d_{i,t} \cdot 2 \ ms < Q_{i,t} \tag{7}$$

$Q_{i,t}$ and $T_{NACK_{i,t}}$ have the same meaning as in Equation (3) above.

Adjustment of parameters $\varepsilon$, $\gamma$, $\eta$ between 0 and 1 allows in this case passing from a scheduler operating according to a maximum rate (MaxRate) criterion, obtained with $\varepsilon = 1$, $\gamma = \eta = 0$, and a scheduler operating according to the MAXQ criterion, with $\varepsilon = \eta = 0$, $\gamma = 1$. Also in this solution, configuration $\varepsilon = \gamma = 0$, $\eta = 1$ is not considered a valid configuration, for the same reasons stated for $\delta = \eta = 0$, $\gamma = 1$.

The considerations made in respect of the Inter TTI Transmission Interval and the periodicity of CQI reporting apply also to the RQT selection method.

It should however be considered that setting $\varepsilon \neq 0$, $\gamma \neq 0$ and $\eta \neq 0$ corresponds to taking the queue contribution twice into account in determining the user's weight: in fact, equation (6) includes both the direct queue contribution term $Q_{i,t}/\sum_{i=1}^{C} Q_{i,t}$, and an indirect contribution implicit in term $d_{i,t}$ which is linked to $Q_{i,t}$ by relation (7). This could be unsuitable, because in this way the behaviour of (5) could be excessively displaced towards MAXQ, thus reducing the rate contribution and, as consequence, the overall cell throughput.

Preferably, therefore, term $Q_{i,t}/\sum_{i=1}^{C} Q_{i,t}$ is neglected (that is $\gamma$ is set to 0) and weight $w_{i,t}$ is computed according to relation:

$$w_{i,t}(d_{i,t}, Q_{i,t}, T_{NACK_{i,t}}) = \varepsilon \cdot \frac{d_{i,t}}{\sum_{i=1}^{C} d_{i,t}} + \eta \cdot \frac{T_{NACK_{i,t}}}{\sum_{i=1}^{C} T_{NACK_{i,t}}} \tag{8}$$

with $\varepsilon + \eta = 1$.

In such case moreover $\varepsilon$ and $\eta$ are always set to values different from 0, so that the variable $T_{NACK_{i,t}}$ can orient the scheduling decision towards users who actually need retransmission, thus reducing the number of lost packets and limiting the average time for a correct decoding.

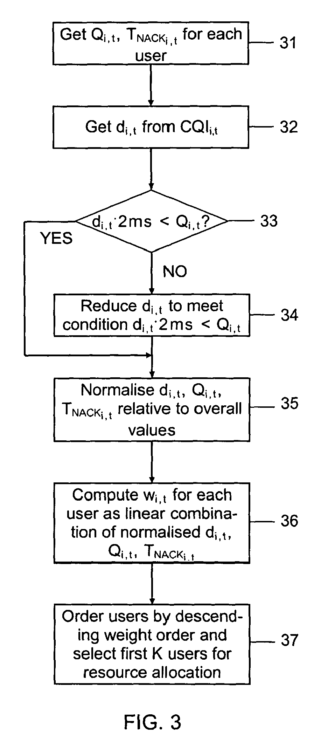

The RQT user selection is depicted in Fig. 3. At step 31, quantities $Q_{i,t}$, $T_{NACK_{i,t}}$ are got for the C configured users similarly to step 21 of Fig. 2 and, at step 32, rate $d_{i,t}$ is determined from the CQI reports. At step 33, it is checked whether the user has a sufficiently great amount of data to transmit, and in the negative, the rate is limited (step 34) so as to meet condition (7) above. If the check of step 33 gives a positive result, or after the rate limitation of step 34, the method continues with steps 35 to 37 that correspond to steps 22 to 24 in Fig. 2, with the substitution of the rate for the fading and with the possible setting of $\gamma$ to 0 in step 36.

The determination of $d_{i,t}$ exploits the reports CQI from the users. In particular, for each report, the so-called CQI reference table is built, i. e. the table that, for each value of CQI, specifies the transport block size, the number of codes and the modulation scheme out of a set of reference ones that the UE is capable of supporting with a detection error not higher than 10% in the first transmission for a reference HS-PDSCH power. The CQI reference table thus univocally determines, for each user, the following set of parameters (CQI reference table field):

$$CQI_i = \begin{cases} TrBk_i \\ n_i \\ m_i \end{cases} \qquad (9)$$

Given a transport block size TrBki admitted with the reported channel conditions, the rate is immediately obtained by dividing TrBki by the 2 ms duration of the TTI.

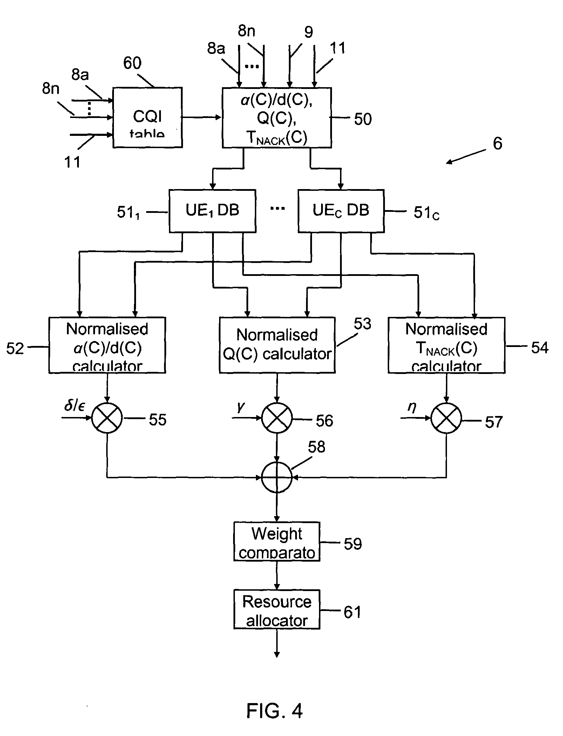

Fig. 4 shows an embodiment of scheduler 6. A first processing and computing unit 50 receives from user terminals 1a...1n, the buffer control units and RNC the information about the channel state, the successful/unsuccessful packet detection, the priority queue occupancy, the timer associated with each queue, etc., and calculates parameters $\alpha_{i,t}$ (or $d_{i,t}$, depending on whether the FQT or the RQT user selection algorithm is implemented), $Q_{i,t}$ and $T_{NACK_{i,t}}$ for all configured users and for all queues of each user. If the RQT selection method is adopted, unit 50 has access to the CQI reference table, built by a suitable calculating unit schematised by block 60, into which the memory storing the CQI table is included. Parenthetical symbols C, L, H associated with the legends in some circuit blocks denote that such blocks operate on all C configured users and, for each of them, on all L queues and all H HARQ processes. Parameters $\alpha$ (or d), Q and $T_{NACK}$ calculated for each user are then stored in data bases $51_1...51_C$ associated with each of the configured users $UE_1...UE_C$.

All data bases $51_1...51_C$ are connected with second, third and fourth processing and computing units 52, 53, 54, respectively, that calculate the normalised parameters

$$a_{i,t} / \sum_{i=1}^{C} \alpha_{i,t} \quad (\text{or } d_{i,t} / \sum_{i=1}^{C} d_{i,t}), \quad Q_{i,t} / \sum_{i=1}^{C} Q_{i,t}, \quad T_{NACK_{i,t}} / \sum_{i=1}^{C} T_{NACK_{i,t}}$$

for all configured users. The normalised parameters of the individual users are fed by units 52, 53 and 54 to multipliers 55, 56 and 57, where such parameters are multiplied by combination factors $\delta$ (or $\varepsilon$), $\gamma$ and $\eta$. The outputs of multipliers 55, 56 and 57 are connected to an adder 58 summing together the products computed by the multipliers to give weights $w_{i,t}$. A comparing and ordering unit 59 orders the weights in descending order, selects the K highest values and supplies a resource allocating unit 61 with the relevant information, for performing resource allocation to the corresponding K users.

Of course, all of the circuitry shown in Fig. 4 can be implemented by the processing devices provided in base stations of mobile communication systems.

It is evident that the above description has been given by way of non-limiting example and that changes and modifications are possible without departing from the scope of the invention. In particular, the weight could be obtained combining said parameter representative of the timing of pending retransmissions with only one said parameters representative of the transmission channel quality and the buffer occupancy. Moreover, even if the invention has been discussed in detail with reference to HSDPA, it can be used also in other systems, like the one known as WiMAX (World Interoperability for Microwave Access), which is a wireless technology disclosed in particular in IEEE 802.16 range of standards.

**Claims**

1. A method of selecting users (1a...1n) for allocation of transmission resources for downlink packet transmission from a base station (2) of a wireless communication system, the method comprising the steps of

   - calculating, for each user having access to a service the packet transmission is related with and at predetermined time intervals, a time-variable weight from parameters related with at least one among a transmission channel quality and a buffer occupancy, and
   - selecting, for resource allocation at each interval, the users with the greatest weights, up to a maximum number of users than can be served simultaneously,

   **characterised in that** the method further comprises determining, for each user, a parameter representative of a timing of pending retransmissions of packets that have not been correctly received by the user (1a...1n) and calculating the weight by combining said parameter representative of the timing of pending retransmissions with at least one of said parameters representative of the transmission channel quality and the buffer occupancy.

2. The method as claimed in claim 1 or 2, **characterised in that** said parameter representative of the timing of pending retransmissions is computed as a normalised value of the maximum ratio, for all queues with pending retransmissions associated with the user (1a...1n), between a time elapsed from the reception, at the base station (2), of a respective signalling of unsuccessful detection of a packet and a time threshold specific for each queue.

3. The method as claimed in claim 1 or 2, **characterised in that** said parameter representative of the transmission channel quality is a normalised value of an estimated channel fading.

4. The method as claimed in claim 1 or 2, **characterised in that** said parameter representative of the transmission channel quality is a normalised value of a data rate attainable with a channel fading experience by the user.

5. The method according to claim 4, **characterised in that** said data rate is limited so as to correspond to an amount of data, transmitted in the considered time interval, not exceeding a maximum queue length for the same user (1a... 1n).

6. The method according to claim 2 to 5, **characterised in that** said fading and data rate are determined from a channel quality information reported by the user (1a...1n) to the base station (2).

7. The method as claimed in claims 4 to 6, **characterised in that** said data rate is determined by building, for each of a plurality of discrete values taken by the channel quality information, a table reporting an admitted size of data blocks transported during a considered interval with that channel quality as well as a number of channels and a modulation scheme admitted for that data block size, and by dividing the data block size admitted for the last reported value of the channel quality information by the duration of the time interval.

8. The method according to any preceding claim, **characterised in that** said weight is calculated as a linear combination of said parameters, with combination factors that are adjustable between 0 and 1 and have a unit sum.

9. The method according to claims 4 to 8, **characterised in that** the combination factor for the parameter representative of the buffer occupancy is set to 0, and the combinations factors for the parameters representative of the rate and the timing of pending retransmissions are both set to non-zero values.

10. The method according to any preceding claim, **characterised in that** the packet transmission is a transmission organised according to the High-speed Downlink Packet Access for Wideband Code Division Multiple Access or the World Interoperability for Microwave Access (Wi-Max) standards.

11. A device for selecting, in a base station (2) of a wireless communication system, users (1a...1n) to which downlink transmission resources for a high speed packet transmission service have to be allocated, the base station (2) including buffers (5) where queues of packets intended for each user are formed, the device (6) comprising processing and computing means (50,51, 52, 53, 54, 55, 56, 57, 58, 59, 60) arranged to receive from the users (1a...1n), from buffer control units and from a controller (4) to which the base station (2) is connected, information about the state of the transmission channel from the base station (2) to each user (1a...1n) and about the buffer occupancy; to calculate for each user, at predetermined time intervals, a weight from parameters representing at least one among a channel quality and said buffer occupancy; and to select, for resource allocation, the users having the highest values of said weight, up to a maximum number of users than can be served simultaneously in each interval, **characterised in that** said processing and computing means (50...60) comprise first processing and computing units (50, $51_1$-$51_c$, 54) for determining a parameter representative of a timing of pending retransmissions of packets which have not been correctly received by the users (1a...1n), based upon the instant of reception of an information that a packet has not correctly been received and upon a maximum time allotted to retransmission for the different queues, and **in that** said processing and computing means (50...61) are arranged to compute said weight by combining said parameter representative of the retransmission timing with at least one of said parameters representative of the transmission channel quality and the buffer occupancy.

12. The device according to claim 11, **characterised in that** said processing and computing means (50...60) comprise second processing and computing units (50, $51_1$-$51_c$, 53, 60) for determining a normalised value of an estimated channel fading, or of an estimated data rate attainable with an estimated channel fading, as said parameter representative of the transmission channel quality.

13. The device according to claim 12, **characterised in that** said second processing and computing units (50, $51_1$-$51_c$, 53, 60) for determining a normalised value of an estimated data rate comprise processing units (60) for receiving a channel quality information reported by each user (1a...1n), and for building and storing, for each of a plurality of discrete values taken by the channel quality information, a table reporting an admitted size of data blocks transported during a considered interval with that channel quality, a number of channels and a modulation scheme admitted for that data block size, the second processing and computing units (50, $51_1$-$51_c$, 53, 60) being arranged to obtain the data rate for a given interval by dividing the admitted data block size admitted for the last reported value of the channel quality information by the duration of the time interval.

14. The device according to any of claims 11 to 13, **characterised in that** said processing and computing means (50...60) are arranged to determine the weight for a user (1a...1n) by using said estimated data rate as said parameter representative of the transmission channel quality, and to limit said estimated data rate so that it corresponds to an amount of data, transmitted in the considered time interval, not exceeding the maximum queue length for the same user (1a...1n).

15. The device according to any of claims 11 to 14, **characterised in that** said processing and computing means (50...60) comprise means (55, 56, 57, 58) for performing a linear combination of said parameters, with combination factors which are adjustable between 0 and 1 and have a unit sum.

16. The device according to claim 14 or 15, **characterised in that** said means (55, 56, 57, 58) for performing a linear combination are arranged to weight the parameter representative of the buffer occupancy by a null combination factor, and to weight the parameters representative of the estimated data rate and the timing of pending retransmissions by non-zero combination factors.

17. The device according to any of claims 11 to 16, **characterised in that** the packet transmission is a transmission organised according to the High-speed Downlink Packet Access for a Wideband Code Division Multiple Access or the World Interoperability for Microwave Access (Wi-Max) standards.

18. A base station (2) of a wireless communication system, **characterised in that** selection of the users to which resources have to be allocated for high-speed downlink packet transmission is performed by a method as claimed in any of claims 1 to 10.

19. A base station (2) of a wireless communication system, **characterised in that** selection of the users to which resources have to be allocated for high-speed downlink packet transmission is performed by a device as claimed in any of claims 11 to 17.

FIG. 1

FIG. 2

**FIG. 3**

FIG. 4

**European Patent Office**

**EUROPEAN SEARCH REPORT**

Application Number

EP 05 42 5267

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,Y | BOARETTO M ET AL: "Fast scheduling policies using WCDMA high speed downlink packet access" VEHICULAR TECHNOLOGY CONFERENCE, 2003. VTC 2003-FALL. 2003 IEEE 58TH ORLANDO, FL, USA 6-9 OCT. 2003, PISCATAWAY, NJ, USA,IEEE, US, 6 October 2003 (2003-10-06), pages 2650-2654, XP010701123 ISBN: 0-7803-7954-3 * page 2650, column 1, line 1 - line 12 * * page 2650, column 2, line 21 - page 2652, column 1, line 16 * * page 2652, column 2, line 30 - line 41 * * page 2653, column 2, line 1 - line 15 * * figures 1,2,8 * ----- | 1-19 | H04L12/56 |
| Y | WO 2004/057810 A (NOKIA CORPORATION) 8 July 2004 (2004-07-08) * page 1, lines 3-5 * * page 1, line 15 - page 2, line 37 * * page 4, line 1 - page 5, line 16 * * page 6, line 10 - page 7, line 12 * * page 8, line 34 - page 9, line 29 * * claims 1,12-17,19-21,23 * * figures 1,4-6 * ----- | 1-19 | |
| | | | TECHNICAL FIELDS SEARCHED (Int.Cl.7) |
| | | | H04L |

The present search report has been drawn up for all claims

| Place of search | Date of completion of the search | Examiner |
|---|---|---|
| Munich | 19 July 2005 | Schrembs, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 42 5267

This annex lists the patent family members relating to the patent documents cited in the above-mentioned European search report.
The members are as contained in the European Patent Office EDP file on
The European Patent Office is in no way liable for these particulars which are merely given for the purpose of information.

19-07-2005

| Patent document cited in search report | | Publication date | Patent family member(s) | | Publication date |
|---|---|---|---|---|---|
| WO 2004057810 | A | 08-07-2004 | US | 2004120306 A1 | 24-06-2004 |
| | | | AU | 2003283722 A1 | 14-07-2004 |
| | | | WO | 2004057810 A2 | 08-07-2004 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R.C. ELLIOTT ; W.A. KRAYMIÈN.** Scheduling Algorithms for the CDMA2000 Packet Data Evolution. *IEEE Vehicular Technology Conference (VTC) Fall,* 2002, vol. 1, 304-310